(19)

Europäisches
Patentamt

European
Patent Office

Office européen
des brevets

(11)  **EP 4 691 267 A1**

(12)  # EUROPEAN PATENT APPLICATION
published in accordance with Art. 153(4) EPC

(43) Date of publication:
**11.02.2026 Bulletin 2026/07**

(21) Application number: 25783034.9

(22) Date of filing: 02.04.2025

(51) International Patent Classification (IPC):
**A23L 33/105** (2016.01)   **A23L 33/17** (2016.01)
**A23L 33/175** (2016.01)   **A23L 33/185** (2016.01)
**A23J 3/14** (2006.01)

(52) Cooperative Patent Classification (CPC):
**A23J 3/14; A23J 3/16; A23L 33/105; A23L 33/17;
A23L 33/175; A23L 33/185**

(86) International application number:
**PCT/KR2025/004365**

(87) International publication number:
**WO 2025/211758 (09.10.2025 Gazette 2025/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 03.04.2024  KR 20240045601

(71) Applicant: **CJ Cheiljedang Corporation
Seoul 04560 (KR)**

(72) Inventors:
• **KIM, Min Hyuk**
  **Seoul 04560 (KR)**
• **YOON, Dae Seong**
  **Seoul 04560 (KR)**
• **KO, Jae Seung**
  **Seoul 04560 (KR)**
• **YOON, Hyo Jung**
  **Seoul 04560 (KR)**

(74) Representative: **Meissner Bolte Partnerschaft
mbB
Patentanwälte Rechtsanwälte
Postfach 86 06 24
81633 München (DE)**

(54)  **COMPOSITION FOR IMPROVING TEXTURE OF TEXTURIZED VEGETABLE PROTEIN**

(57)   Provided are a composition for producing textured vegetable protein (TVP), a composition for improving texture of textured vegetable protein, textured vegetable protein including the composition for producing textured vegetable protein, a method for producing textured vegetable protein, and a method for improving texture of textured vegetable protein.

**EP 4 691 267 A1**

**Description**

## TECHNICAL FIELD

[CROSS-REFERENCE TO RELATED APPLICATIONS]

This application claims priority from Korean Patent Application No. 10-2024-0045601, filed on April 3, 2024, the disclosure of which is incorporated by reference herein.

The present disclosure relates to a composition for producing textured vegetable protein (TVP), a composition for improving texture of textured vegetable protein, textured vegetable protein including the composition for producing textured vegetable protein, a method for producing textured vegetable protein, and a method for improving texture of textured vegetable protein.

## BACKGROUND ART

There is a growing demand to obtain protein from alternative foods such as vegetable protein, microbial protein, and insect protein instead of meat. In addition, spreading awareness that vegetarian diet is good for health and concern for animal welfare also increase the demand for alternative foods. According to Korea Agro-Fisheries & Food Trade Corporation, domestic plant-based alternative food market size is expected to grow by an average annual rate of 5.4% (2021-2025).

Conventional alternative meat has improved mouthfeel such as tissue cohesion and chewiness of the alternative meat mainly by adding various blending materials such as gluten, rice, wheat or corn starch, cellulose, or fiber to defatted soybean flour and isolated soybean protein raw materials. However, in order to satisfy consumer needs in the alternative meat market and fully meet the conditions as a practical meat substitute, there is a need to develop alternative meat that is comparable or even superior to real meat, in terms of texture attributes like juiciness or mouthfeel.

## DISCLOSURE OF THE INVENTION

## TECHNICAL PROBLEM

An objective of the present disclosure is to provide a composition for producing textured vegetable protein (TVP).

Another objective of the present disclosure is to provide a composition for improving texture of textured vegetable protein.

Another objective of the present disclosure is to provide a method for producing textured vegetable protein having improved texture.

Another objective of the present disclosure is to provide a method for improving texture of textured vegetable protein.

Still another objective of the present disclosure is to provide textured vegetable protein having improved texture.

## TECHNICAL SOLUTION

An aspect of the present disclosure provides a composition for producing textured vegetable protein including a basic amino acid.

The basic amino acid may be an amino acid including a basic side chain and may dissociate in a neutral pH range so that the side chain has a (+) charge.

The basic amino acid may include, for example, arginine (Arg), histidine (His), or lysine (Lys).

Specifically, the basic amino acid may be produced by a microbial fermentation process, by a chemical method, by a hydrolysis or by extraction method, but is not limited thereto, and any production method that can be adopted by a person skilled in the art for the production of the basic amino acid.

For example, the basic amino acid may be provided as a fermented product (fermentation composition) including the basic amino acid.

As a specific aspect of the present disclosure, the composition for producing textured vegetable protein may include at least one basic amino acid selected from the group consisting of arginine, histidine, and lysine.

The arginine is one of α-amino acids forming protein and is known as a semi-essential amino acid required for the growth of living organisms.

The histidine is an amino acid forming proteins from animals and plants and is known as an essential amino acid.

The lysine is one of α-amino acids, is abundant in animal proteins, and is known as an essential amino acid.

In a specific aspect of the present disclosure, the composition for producing textured vegetable protein may further include cysteine (Cys).

The cysteine is a type of amino acid including sulfur and known as a non-essential amino acid.

Specifically, the cysteine may be produced by a microbial fermentation process, by a chemical method, or by a hydrolysis or extraction method, but is not limited as long as it is produced by a production method which may be adopted by a person skilled in the art for the production of the cysteine.

For example, the cysteine may be provided as a fermented material (fermentation composition) including the cysteine.

When the composition for producing textured vegetable protein of the specific aspect of the present disclosure includes both the basic amino acid and the cysteine, a weight ratio between the basic amino acid and the cysteine in the composition for producing textured vegetable protein may be 4:1 to 75:1, for example, 4.1:1 to 74:1, 4.2:1 to 73:1, 4.3:1 to 72:1, or 4.3:1 to 71:1, but is not limited thereto. When the weight ratio of the basic amino acid and the cysteine in the composition for producing textured vegetable protein satisfies the numerical range, the texture of the textured vegetable protein produced from the composition for production may be improved, or structuring intensity may be increased.

As an example, the weight ratio between the basic amino acid and the cysteine in the composition for producing textured vegetable protein may be 14:1 to 70:1.

As another example, the weight ratio between the basic amino acid and the cysteine in the composition for producing textured vegetable protein may be 13:3 to 65:1.

In addition, in the present disclosure, the composition for producing textured vegetable protein may further include an additional component, and specifically, may further include at least one selected from the group consisting of starch, vegetable oil, and maltodextrin, but is not limited thereto.

The starch may include natural starch (such as corn starch, potato starch, sweet potato starch, tapioca starch, rice starch, or wheat starch), modified starch, or starch, but is not limited thereto. Specifically, the starch may be corn starch.

The vegetable oil may include soybean oil, olive oil, palm oil, corn oil, palm olein oil, palm stearin oil, coconut oil, canola oil, or sunflower oil, but is not limited thereto.

In the present disclosure, the textured vegetable protein may be a food material obtained by processing a protein raw material to make texture and mouthfeel similar to real meat and may also be referred to as vegetarian meat, plant-based meat, soy meat, artificial meat, wheat meat, meat analog, artificial meat, meatless meat, or simulated meat. Specifically, in the present disclosure, the textured vegetable protein may refer to vegetable protein produced by an extrusion process described later, using a vegetable protein raw material as a main raw material.

In the present disclosure, the textured vegetable protein may include high-moisture meat analogue (HMMA), but is not limited thereto.

In the present disclosure, the textured vegetable protein may include the vegetable protein raw material. Specifically, the vegetable protein raw material may include protein derived from at least one selected from the group consisting of wheat, soybeans, peas, sesame, cotton seeds, and rice.

Specifically, the vegetable protein raw material may include soy protein, pea protein, or wheat gluten.

In the present disclosure, the textured vegetable protein may further include a binder or an excipient.

The binder may impart a binding force between the vegetable protein raw materials, and as the binder, starch, vegetable oils, phosphate binders such as acidic sodium pyrophosphate, potassium pyrophosphate, sodium pyrophosphate, potassium metaphosphate, or sodium metaphosphate, whey protein, or transglutaminase (TG) as an enzyme preparation, but is not limited thereto.

The excipient may be added so that the textured vegetable protein has a certain form, and a preservative, a wetting agent, a dispersant, a suspending agent, a buffering agent, a stabilizer, or an isotonic agent may be used as the excipient, but the present disclosure is not limited thereto.

The composition for producing textured vegetable protein may improve texture of the textured vegetable protein (TVP). Therefore, the textured vegetable protein produced using the composition for producing textured vegetable protein may have improved texture or an increased structuring intensity.

Specifically, the "improved texture" of the textured vegetable protein may mean that the textured vegetable protein shows meat-like texture, and for example, the improved texture of the textured vegetable protein may include an increase in hardness, springiness, cohesiveness, chewiness, or cutting force of the textured vegetable protein.

In addition, the texture of the textured vegetable protein may be evaluated using *Anisotropy index* (Lee et *al.,* 2023; Osen et *al.,* 2014; Chiang et *al.,* 2019), and the anisotropy index value may be indicated as a degree of texturization (DOT) and is used as an indication showing a production degree of fibrous tissue in the textured vegetable protein. Specifically, the anisotropy index may be calculated as a ratio of transversal direction cutting strength to longitudinal direction cutting strength of the textured vegetable protein, respectively.

The anisotropy index may be calculated by the following Equation 1, and the magnitude of cutting strength in Equation 1 may be a value measured using a texture analyzer under the following measurement conditions:

[Equation 1]

$$\text{Anisotropy index} = \frac{\text{Transversal direction cutting strength}}{\text{Longitudinal direction cutting strength}}$$

[Measurement conditions]

**Instrument:** Micro stable (TA.XT plus)
**Mode:** Single compression
**\*Probe:** Warner Bratzler blade (HDP/WBV)
**Distances:** 25 mm
**Test speed:** 1/ 2/ 10 mm/sec (pre-, -, post-)
**Auto trigger:** 0.005 N
**Sample size:** 20 \* 20 \* 5 mm.

The textured vegetable protein produced using the composition for producing textured vegetable protein of the present disclosure has improved texture and the anisotropy index value of the produced textured vegetable protein may be 1 or more. Specifically, the anisotropy index value of the textured vegetable protein may be 1 to 2, 1.1 to 1.9, 1.2 to 1.8, 1.3 to 1.7, or 1.5 to 1.7, but is not limited thereto.

Another aspect of the present disclosure provides a composition for improving texture of textured vegetable protein including the composition for producing textured vegetable protein including a basic amino acid.

Since the descriptions of *"the composition for producing textured vegetable protein, the basic amino acid, the cysteine, the textured vegetable protein, the texture of textured vegetable protein, and the texture improvement"* are the same as the above descriptions in an aspect of the present disclosure, they will not be repeated.

In the present disclosure, when the composition for improving texture of textured vegetable protein includes both the basic amino acid and the cysteine, a weight ratio between the basic amino acid and the cysteine in the composition for improving texture of textured vegetable protein may be 4:1 to 75:1, for example, 4.1:1 to 74:1, 4.2:1 to 73:1, 4.3:1 to 72:1, 4.3:1 to 71:1, or 14:1 to 70:1, but is not limited thereto.

Specifically, the weight ratio between the basic amino acid and the cysteine in the composition for improving texture of textured vegetable protein may be 14:1 to 70:1.

In addition, the weight ratio between the basic amino acid and the cysteine in the composition for improving texture of textured vegetable protein may be 13:3 to 65:1.

Another aspect of the present disclosure provides a method for producing textured vegetable protein (TVP).

The method for producing textured vegetable protein may include extruding a mixture of a composition for producing textured vegetable protein and a vegetable protein raw material.

In a specific aspect of the present disclosure, the method for producing textured vegetable protein may further include mixing the composition for producing textured vegetable protein with a vegetable protein raw material, before the step of extrusion.

Specifically, the method for producing textured vegetable protein may include: (a) mixing the composition for producing textured vegetable protein and a vegetable protein raw material; and (b) extruding the mixture, but is not limited thereto.

Since the descriptions of "*composition for producing textured vegetable protein, textured vegetable protein, and vegetable protein raw material"* are the same as the above descriptions in an aspect of the present disclosure, they will not be repeated.

Step (a) may include homogenizing a mixture of the composition for producing textured vegetable protein and a vegetable protein raw material.

The homogenization may refer to dispersing each component of a heterogeneous mixture into even fine particulate or molecular forms to make the entire mixture homogeneous. The homogenization may be performed using a means or instrument which may be adopted by a person skilled in the art for homogenization, and for example, may be performed using a highspeed agitator, a colloid mill, a ultrasonicator, and the like, but is not limited thereto.

During the mixing of step (a), when the composition for producing textured vegetable protein includes the basic amino acid and the cysteine, a weight ratio between the basic amino acid and the cysteine in the mixture may be 4:1 to 75:1, for example, 4.1:1 to 74:1, 4.2:1 to 73:1, 4.3:1 to 72:1, 4.3:1 to 71:1, 14:1 to 70:1, or 13:3 to 65:1, but is not limited thereto.

In step (a), at least one selected from the group consisting of starch, vegetable fat, and maltodextrin may be mixed together, in addition to the composition for producing textured vegetable protein and the vegetable protein raw material.

Step (b) may be extruding the mixture using an extruder. Specifically, the extrusion may be a method of molding the mixture raw material by heating and flowing a raw material to be molded in a heating barrel or a heating cylinder, and then continuously pushing the raw material through a die or a die orifice, using an extruder.

The extruder may include an actuator, a feeder, a screw, a barrel, or a die, the raw material fed to the extruder may be compressed in a space between the screw and the barrel, and when a solid bed is formed by the compression to produce sufficient friction, continuous extrusion may be allowed.

In step (b), water may be further supplied when supplying the mixture to the extruder. For example, the water may include purified water.

In step (b), the mixture and the water may be mixed in the barrel of the extruder.

In step (b), the mixture and the water may be mixed and texturized in the barrel of the extruder.

The production method may further include (c) freezing the extrudate.

In the present disclosure, the freezing may include an operation of cooling a material to obtain a temperature lower than an atmospheric temperature and preserving the temperature or freezing.

In the present disclosure, the freezing may include quick freezing. Specifically, the quick freezing may be a freezing method with which it takes about 30 minutes or less to lower the temperature of a food center, at which the temperature is lowered at a slowest rate during freezing, from 0°C to -5°C (maximum ice crystal formation zone).

As a means for quick freezing, any means which may be adopted by a person skilled in the art for quick freezing may be used without limitation. For example, a freezer which may maintain a temperature of -30°C or lower, -35°C or lower, or -40°C or lower may be used, but is not limited thereto.

Specifically, the quick freezing may be performed for 10 minutes or more, and for example, may be performed for 30 minutes, but is not limited thereto.

As an example, the quick freezing may include storing the extrudate in a freezer maintaining the temperature of -40°C or lower for 30 minutes.

Another aspect of the present disclosure provides a method for improving texture of textured vegetable protein (TVP) including: extruding a mixture of the composition for producing textured vegetable protein or the composition for improving texture of textured vegetable protein described above and a vegetable protein raw material.

As a specific aspect of the present disclosure, the method for improving texture of textured vegetable protein may further include mixing the composition for producing textured vegetable protein or the composition for improving texture of textured vegetable protein with a vegetable protein raw material, before the step of extrusion.

In the present disclosure, the method for improving texture of textured vegetable protein includes: (a) mixing the composition for producing textured vegetable protein or the composition for improving texture of textured vegetable protein with a vegetable protein raw material; and (b) extruding the mixture.

Since the descriptions of *"the composition for producing textured vegetable protein, the composition for improving texture of textured vegetable protein, the vegetable protein raw material, texture improvement, mixing, extrusion, and steps (a) and (b)"* are the same as the above descriptions in an aspect of the present disclosure, they will not be repeated.

Another aspect of the present disclosure provides textured vegetable protein (TVP) including the composition for producing textured vegetable protein.

The textured vegetable protein including the composition for producing textured vegetable protein may have improved texture.

Since the descriptions of *"the composition for producing textured vegetable protein, textured vegetable protein, and texture improvement"* are the same as the above descriptions in an aspect of the present disclosure, they will not be repeated.

The "textured vegetable protein" of the present disclosure may be produced by the production method.

The textured vegetable protein of a specific aspect of the present disclosure may include 0.005 to 5 wt% of a basic amino acid based on the total weight of the textured vegetable protein.

Specifically, the content of the basic amino acid in the textured vegetable protein of the present disclosure may be in a range selected from the group consisting of any one lower limit selected from the group consisting of 0.005, 0.01, 0.015, 0.02, 0.025, and 0.03 wt% and any one upper limit selected from the group consisting of 1, 2, 3, 4, and 5 wt%, based on the total weight of the textured vegetable protein, and for example, the content of the basic amino acid in the textured vegetable protein may be 0.01 to 5 wt%, 0.015 to 4 wt%, 0.02 to 3 wt%, 0.025 to 2 wt%, or 0.03 to 1 wt%, but is not limited thereto.

In the present disclosure, the basic amino acid of the textured vegetable protein of the present disclosure may be arginine, and the content of arginine in the textured vegetable protein of the present disclosure may be 0.005 to 5 wt%, specifically 0.05 to 0.9 wt%, based on the total weight of the textured vegetable protein.

In the present disclosure, the basic amino acid of the textured vegetable protein of the present disclosure may be lysine, and the content of lysine in the textured vegetable protein of the present disclosure may be 0.005 to 5 wt%, specifically 0.1 to 0.5 wt%, based on the total weight of the textured vegetable protein.

In the present disclosure, the basic amino acid of the textured vegetable protein of the present disclosure may be histidine, and the content of histidine in the textured vegetable protein of the present disclosure may be 0.005 to 5 wt%, specifically 0.1 to 0.5 wt%, based on the total weight of the textured vegetable protein.

In a specific aspect of the present disclosure, when the composition for producing textured vegetable protein includes the basic amino acid and cysteine, the textured vegetable protein of the present disclosure may include 0.005 to 0.2 wt% of the cysteine based on the total weight of the textured vegetable protein.

Specifically, the content of the cysteine in the textured vegetable protein of the present disclosure may be in a range selected from the group consisting of any one lower limit selected from the group consisting of 0.005, 0.007, 0.009, and 0.01 wt% and any one upper limit selected from the group consisting of 0.05, 0.1, 0.15, and 0.2 wt%, based on the total weight of the textured vegetable protein, and for example, the content of the cysteine in the textured vegetable protein may be 0.005 to 0.2 wt%, 0.007 to 0.15 wt%, 0.009 to 0.1 wt%, or 0.01 to 0.05 wt%, but is not limited thereto.

In the present disclosure, the textured vegetable protein of the present disclosure may include the basic amino acid and cysteine, in which the content of the cysteine in the textured vegetable protein may be, specifically, 0.01 to 0.05 wt%, more specifically 0.5 to 1 wt%, based on the total weight of the textured vegetable protein.

In a specific aspect of the present disclosure, when the composition for producing textured vegetable protein includes the basic amino acid and the cysteine, a weight ratio between the basic amino acid and the cysteine in the textured vegetable protein of the present disclosure may be 4:1 to 75:1, for example, 4.1:1 to 74:1, 4.2:1 to 73:1, 4.3:1 to 72:1, 4.3:1 to 71:1, 13:3 to 65:1, or 14:1 to 70:1, but is not limited thereto.

The textured vegetable protein may have various sizes and various forms depending on the shape of the die or die orifice of the extruder and temperature and pressure conditions during extrusion. For example, the form of the textured vegetable protein may be chunk, flakes, granules, minced, sliced, or strip forms, but is not limited thereto.

In an exemplary embodiment, the anisotropy index value of the textured vegetable protein may be 1 or more, specifically, the anisotropy index value of the textured vegetable protein may be 1 to 2, 1.1 to 1.9, 1.2 to 1.8, 1.3 to 1.7, or 1.5 to 1.7, but is not limited thereto.

## ADVANTAGEOUS EFFECTS

Since the composition for producing textured vegetable protein of the present disclosure uses a basic amino acid instead of components such as gluten, starch, cellulose, or fiber which have been conventionally used for production of substitute meat, when the composition for producing textured vegetable protein is added during production of the textured vegetable protein (TVP), the texture and the degree of texturization (anisotropy index) of extruded TVP are improved. It was confirmed that significant fibrous texture formation was promoted in the extruded TVP even when the basic amino acid was added alone according to the components in the composition for producing textured vegetable protein of the present disclosure, and when cysteine was added together with the basic amino acid, it was confirmed that the texture of TVP was further improved and a synergistic effect of promoting fibrous texture formation occurred.

However, the effect of the present disclosure is not limited to the effects mentioned above, and other effects which are not mentioned herein may be clearly understood by a person skilled in the art from the following description.

## BRIEF DESCRIPTION OF THE DRAWINGS

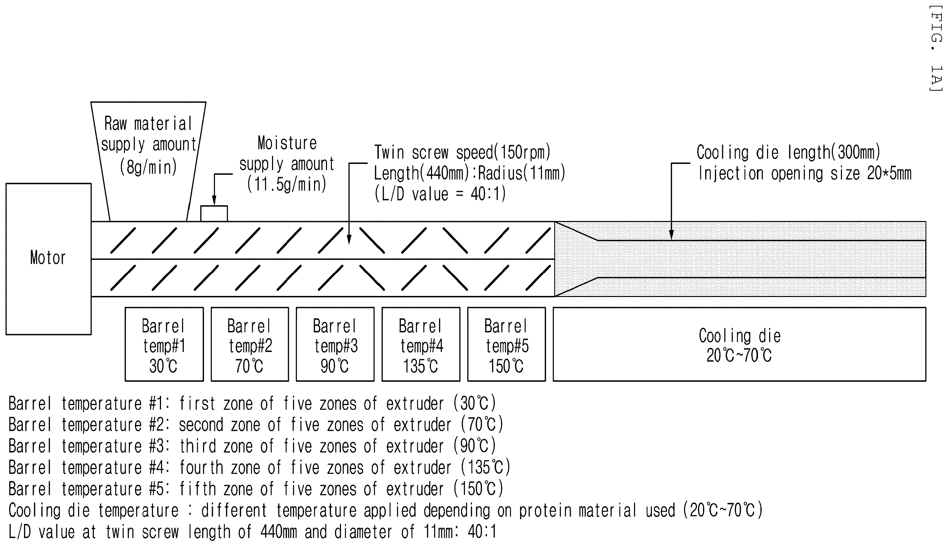

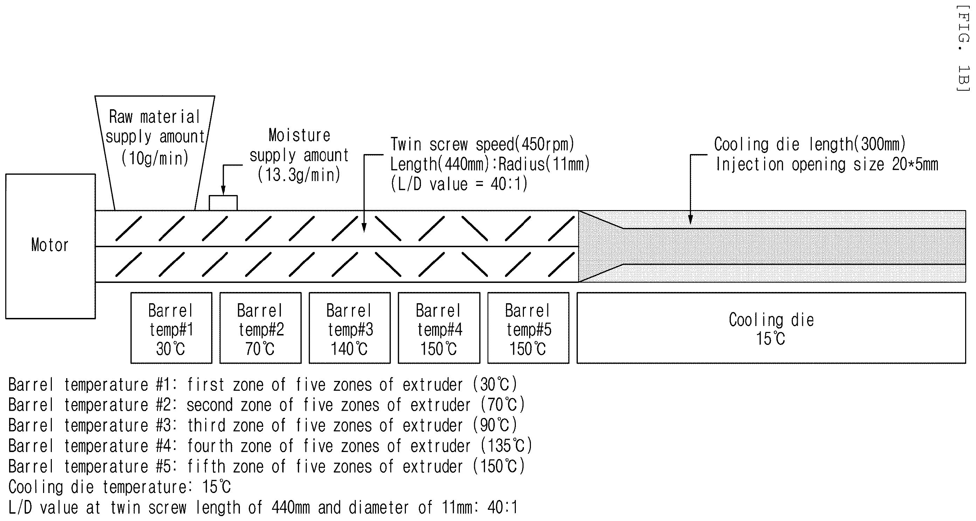

FIGS. 1A and 1B are drawings illustrating an extrusion process performed during textured vegetable protein (TVP) production of the present disclosure. Specifically, FIG. 1A shows an extrusion process during textured vegetable protein (TVP) production of Preparation Examples 1 and 2, and FIG. 1B shows an extrusion process during textured vegetable protein (TVP) of Preparation Example 3.

FIG. 2 is a drawing showing a texture analyzer measurement process of a textured vegetable protein extrudate obtained by treating the composition for producing textured vegetable protein of the present disclosure.

FIGS. 3A to 3C are drawings showing texture analyzer measurement results of textured vegetable protein extrudates for each arginine content, when the composition for producing textured vegetable protein including arginine was used.

FIGS. 4A to 4C are drawings showing texture analyzer measurement results of textured vegetable protein extrudates for each cysteine content, when the composition for producing textured vegetable protein including cysteine was used.

FIGS. 5A to 5C are drawings showing texture analyzer measurement results of textured vegetable protein extrudates for each content of arginine and cysteine, when the composition for producing textured vegetable protein including arginine and cysteine was used.

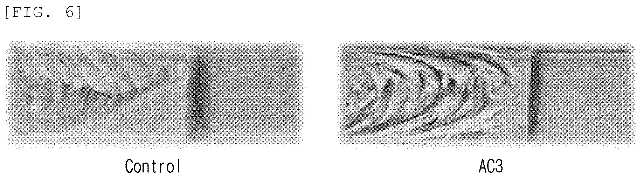

FIG. 6 is a drawing showing appearances of a control including no composition for producing textured vegetable protein of the present disclosure and textured vegetable protein extrudates including the composition for producing textured vegetable protein of the present disclosure (AC3).

FIGS. 7A to 7C are drawings showing texture analyzer measurement results of textured vegetable protein extrudates for each content of lysine and histidine.

## MODE FOR CARRYING OUT THE INVENTION

Hereinafter, the present disclosure will be described in detail by the examples. However, the following examples only specifically illustrate the present disclosure, and the content of the present disclosure is not limited by the following examples.

**[Preparation Example 1]**

**Production of textured vegetable protein (TVP) including composition for producing textured vegetable protein - TVP including soy protein**

In order to evaluate the effect of the composition for producing textured vegetable protein including a basic amino acid and/or cysteine (MasterC, CJ BIO) on the texture of textured vegetable protein, a sample of TVP was produced under the following conditions. As the basic amino acid, arginine (L-Arginine FB, CJ BIO), histidine (L-Histidine FB, CJ BIO) and/or lysine (L-Lysine, Sigma Aldrich) were used. First, as a protein raw material, soy protein (Soy protein, Yuxin(China)) was used, a composition for producing textured vegetable protein was added to the soy protein raw material at a content of 0.005% to 2.0% based on the final extrudate, and they were mixed for homogenization to produce a homogenized raw material, which was used in the experiment. The homogenized raw material was fed to an extruder, mixed with water by a screw in a barrel, and texturized, thereby producing high-moisture TVP. The raw material was fed at a speed of 8 g/min and water was added at a speed of 11.5 g/min to the extruder, and the instrument condition parameters were as follows: barrel temperature #1: first zone of five zones of extruder (30°C), barrel temperature #2: second zone of five zones of extruder (70°C), barrel temperature #3: third zone of five zones of extruder (90°C), barrel temperature #4: fourth zone of five zones of extruder (135°C), barrel temperature #5: fifth zone of five zones of extruder (150°C), a twin screw speed of 150 rpm, L/D value at a length of 440 mm, and a diameter of 11 mm: 40:1, cooling die temperature: 20 to 70°C. After the extrusion process, the TVP sample secured after extrusion in the cooling die was quick frozen at -40°C for 30 minutes directly after the extrusion and kept frozen.

**[Preparation Example 2]**

**Production of textured vegetable protein including composition for producing textured vegetable protein - TVP including pea protein**

Textured vegetable protein(TVP) was produced in the same manner as in Preparation Example 1, except that pea protein (Roquette (France)) which is commonly used in TVP production was used as the protein raw material.

**[Preparation Example 3]**

**Production of textured vegetable protein including composition for producing textured vegetable protein - TVP including mixed protein raw material**

In order to evaluate the effect of the composition for producing textured vegetable protein(TVP), a sample of TVP was produced from the mixed protein raw material under the following conditions. First, according to the raw material blending of the following Table 1, a powder combination including vegetable protein raw materials and sub-materials was mixed to prepare a mixture.

[Table 1]

| Raw material name (Manufacturer) | Wheat gluten (Quifeng) | Isolated soy protein (Yuwang) | Isolated pea protein (Shuangta) | Corn starch (Samyang Corporation) | Corn oil (CJ Cheilje dang) | Indigestible maltodextrin (Matsutani) | Composition for producing textured vegetable protein (arginine) |
|---|---|---|---|---|---|---|---|
| Content (%) | 45 | 20 | 14 | 10.25 | 1 | 4.75-9.75 | 0-5 |

As the protein raw material, the mixture of protein raw material prepared by the raw material blending of Table 1 was used. The mixed raw material was fed to an extruder, mixed with water by a screw in a barrel, and texturized, thereby producing high-moisture TVP. The raw material was fed at a speed of 10 g/min and water was added at a speed of 13.3 g/min to the extruder, and the instrument condition parameters were as follows: barrel temperature #1: first zone of five zones of extruder (30°C), barrel temperature #2: second zone of five zones of extruder (70°C), barrel temperature #3: third zone of five zones of extruder (140°C), barrel temperature #4: fourth zone of five zones of extruder (150°C), barrel temperature #5: fifth zone of five zones of extruder (150°C), a twin screw speed of 450 rpm, L/D value at a length of 440 mm, and a diameter of 11 mm: 40:1, cooling die temperature: 15°C. After the extrusion process, the TVP sample secured after extrusion in the cooling die was quick frozen at -40°C for 30 minutes directly after the extrusion and kept frozen.

**[Example 1]**

**Evaluation of effect of improving texture of textured vegetable protein**

An effect of improving or enhancing texture of textured vegetable protein (TVP) was evaluated in TVP produced using the composition for producing textured vegetable protein including arginine and/or cysteine. In Example 1, TVPs of Preparation Examples 1 to 3 were thawed in a refrigerator and then sampled at a room temperature equilibrium state (25°C), and instrumental analysis was performed.

**1-1. Measurement of degree of texturization of textured vegetable protein**

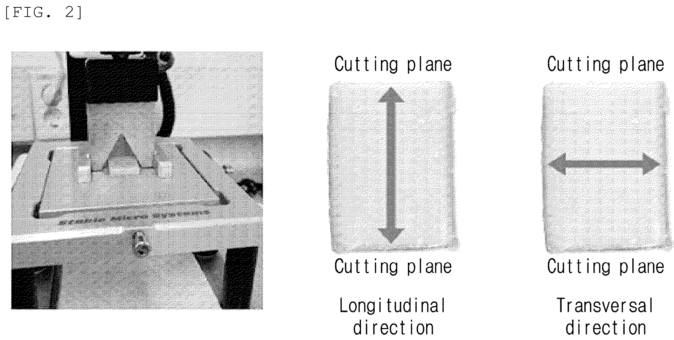

In order to measure the degree of texturization of textured vegetable protein(TVP), an anisotropy index was used (Lee et *al.,* 2023; Osen *et al.,* 2014; Chiang et *al.,* 2019). The anisotropy index value is also indicated as a degree of texturization (DOT) and used as an indicator showing how many fibrous structure were formed. Specifically, the *Anisotropy index* was calculated as a ratio of transversal direction cutting strength to longitudinal direction cutting strength of the textured vegetable protein, respectively (FIG. 2). Therefore, the anisotropy index may also be calculated by the following Equation:

$$\text{Anisotropy index} = \frac{\text{Transversal direction cutting strength}}{\text{Longitudinal direction cutting strength}}$$

The cutting strength size was measured by a texture analyzer (TA-XT plus, Stable Micro Systems, England), and the detailed measurement conditions of the texture analyzer are as shown in the following Table 2:

[Table 2]

| Instrument | Micro stable (TA.XT plus) |
|---|---|
| **Mode** | Single compression |
| **Probe** | Warner Bratzler blade (HDP/WBV) |
| **Distance** | 25 mm |
| **Test speed** | 1 / 2 / 10 mm/sec (pre-, -, post-) |
| **Auto trigger** | 0.005 N |
| **Sample size** | 20 x 20 x 5 mm |

**1-2. Comparison of texture of textured vegetable protein by arginine (ARG) content**

Changes of texture of textured vegetable protein(TVP) for each content of arginine of the composition for producing textured vegetable protein which was added to TVP were compared and analyzed. Specifically, to TVP including the soy protein of Preparation Example 1, arginine of the composition for producing textured vegetable protein was added at contents of 0.03%, 0.05%, 0.1%, 0.5%, 0.7%, 0.9%, 1.0%, and 2.0%, respectively, based on the final extrudate, respectively, thereby producing TVP (SA0.03, SA0.05, SA0.1, SA0.5, SA0.7, SA0.9, SA1.0, and SA2.0, respectively), to TVP including pea protein of Preparation Example 2, arginine for the composition for producing textured vegetable protein was added at contents of 0.03%, 0.05%, 0.1%, 0.5%, 0.7%, 0.9%, 1.0%, and 2.0%, respectively, based on the final extrudate, respectively, thereby producing TVP (PA0.03, PA0.05, PA0.1, PA0.5, PA0.7, PA0.9, PA1.0, and PA2.0, respectively), and to TVP including the protein raw material mixture of Preparation Example 3, arginine of the composition for producing textured vegetable protein was added at contents of 0.65%, 0.66%, 0.68%, 0.69%, 0.71%, and 0.72%, respectively, thereby producing TVP (A1, A2, A3, A4, A5, and A6, respectively). For TVPs produced as described above, degrees of texturization were measured by the method described above in 1-1 of Example 1. At this time, as a control, TVP to which the composition for producing textured vegetable protein was not added and which was produced by extruding only the protein raw material was used.

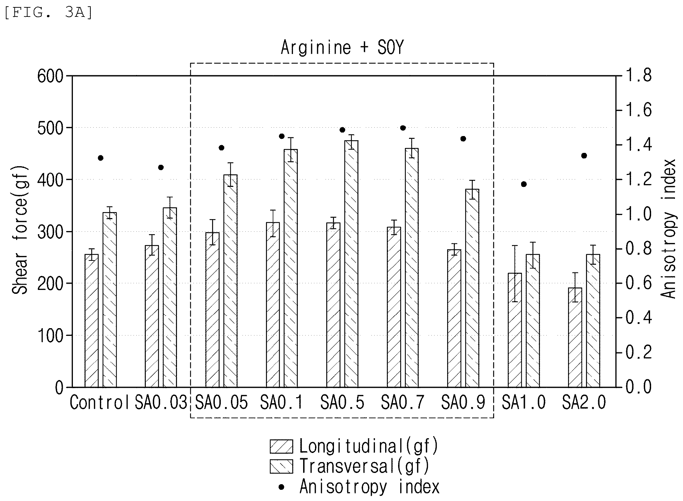

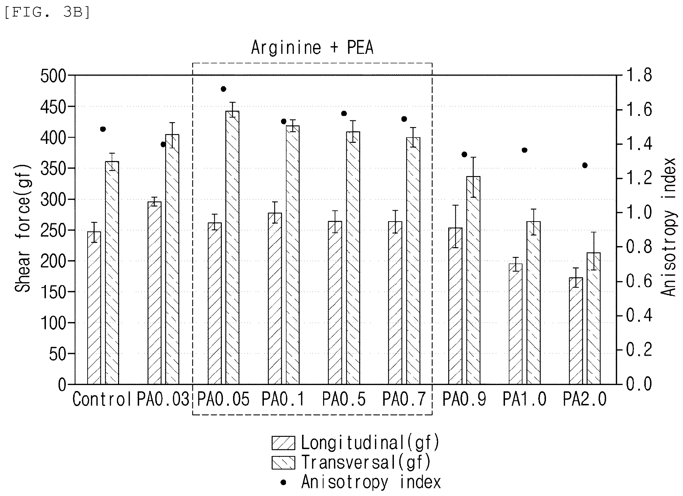

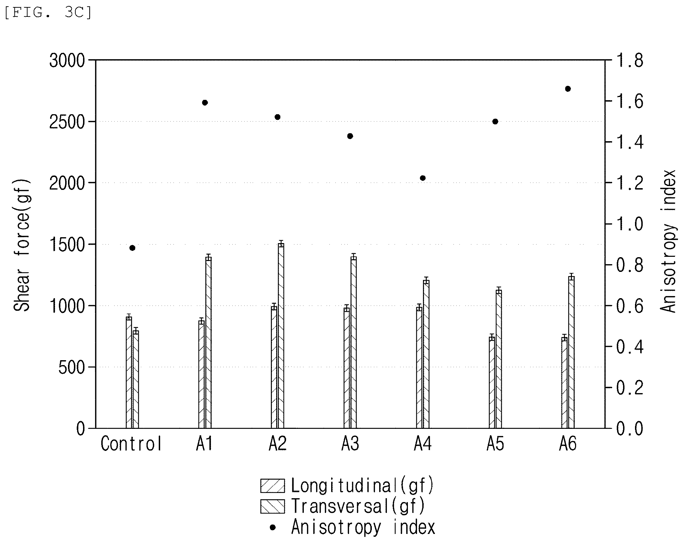

As a result, as shown in the following Table 3 and FIG. 3A, it was confirmed that TVP including the soy protein of Preparation Example 1 had a significantly increased texture strength, when arginine of the composition for producing textured vegetable protein was added at a content of 0.05% to 0.7%. As a result, as shown in the following Table 4 and FIG. 3B, it was confirmed that TVP including the pea protein of Preparation Example 2 had a significantly increased structuring intensity, when mixed with arginine of the composition for producing TVP at a content of 0.03% to 0.7%. Also, as shown in the following Table 5 and FIG. 3C, it was confirmed that TVP including the protein raw material mixture of Preparation Example 3 in all arginine test group had an increased anisotropy index as compared with that of control and showed a value of 1 or more.

[Table 3]

| Blending ratio name | Control | SA0.03 | SA0.05 | SA0.1 | SA0.5 | SA0.7 | SA0.9 | SA1.0 | SA2.0 |
|---|---|---|---|---|---|---|---|---|---|
| Arginine (%) | 0 | 0.03 | 0.05 | 0.1 | 0.5 | 0.7 | 0.9 | 1.0 | 2.0 |
| Longitudinal (gf) | 255.47 | 273.67 | 298.43 | 317.39* | 317.81* | 308.43* | 265.33 | 219.21** | 255.33* |
| Transversal (gf) | 337.41 | 345.03 | 409.67* | 546.52* | 471.49* | 460.42* | 379.46 | 255.58** | 255.33* |
| Anisotropy index | 1.32 | 1.26 | 1.37 | 1.44 | 1.48 | 1.49 | 1.43 | 1.17 | 1.33 |
| *) Measurements which were significantly different from control were marked (positive value*, negative value**). | | | | | | | | | |

[Table 4]

| Blending ratio name | Control | PA0.03 | PA0.05 | PA0.1 | PA0.5 | PA0.7 | PA0.9 | PA1.0 | PA2.0 |
|---|---|---|---|---|---|---|---|---|---|
| Arginine (%) | 0 | 0.03 | 0.05 | 0.1 | 0.5 | 0.7 | 0.9 | 1.0 | 2.0 |
| Longitudinal (gf) | 242.76 | 291.11* | 258.18 | 273.70 | 259.67 | 259.84 | 251.28 | 192.05** | 169.41* |
| Transversal (gf) | 355.39 | 398.25* | 437.28* | 412.00* | 402.44* | 395.06* | 331.09 | 258.83** | 211.33* |
| Anisotropy index | 1.46 | 1.37 | 1.69 | 1.51 | 1.55 | 1.52 | 1.32 | 1.35 | 1.25 |
| *) Measurements which were significantly different from control were marked (positive value*, negative value**). | | | | | | | | | |

[Table 5]

| Blending ratio name | Control | A1 | A2 | A3 | A4 | A5 | A6 |
|---|---|---|---|---|---|---|---|
| Arginine (%) | 0 | 0.65 | 0.66 | 0.68 | 0.69 | 0.71 | 0.72 |
| anisotropy index | 0.88 | 1.59 | 1.52 | 1.42 | 1.22 | 1.5 | 1.66 |

**1-3. Comparison of texture of textured vegetable protein by cysteine (CYS) content**

Changes of texture of textured vegetable protein(TVP) for each content of cysteine of the composition for producing textured vegetable protein which was added to TVP were compared and analyzed. Specifically, to TVP including the soy protein of Preparation Example 1, cysteine was added at contents of 0.005%, 0.01%, 0.02%, 0.05%, 0.1%, and 0.2%, respectively, based on the final extrudate, respectively, thereby producing TVP (SC0.005, SC0.01, SC0.02, SC0.05, SC0.1, and SC0.2, respectively), to TVP including pea protein of Preparation Example 2, cysteine was added at contents of 0.005%, 0.01%, 0.02%, 0.05%, 0.1%, and 0.2%, respectively, based on the final extrudate, respectively, thereby producing TVP (PC0.005, PC0.01, PC0.02, PC0.05, PC0.1, and PC0.2, respectively), and to TVP including the protein raw material mixture of Preparation Example 3, cysteine was added at contents of 0.01%, 0.03%, 0.05%, and 0.15%, respectively, thereby producing TVP (C1, C2, C3, and C4, respectively). For TVPs produced as described above, degrees of texturization were measured by the method described above as in 1-1 of Example 1. At this time, as a control, TVP to which the composition for producing textured vegetable protein was not added and which was produced by extruding only the protein raw material was used.

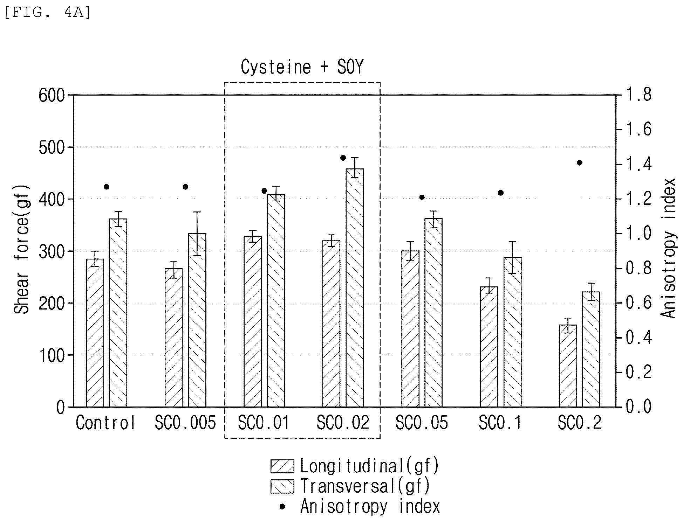

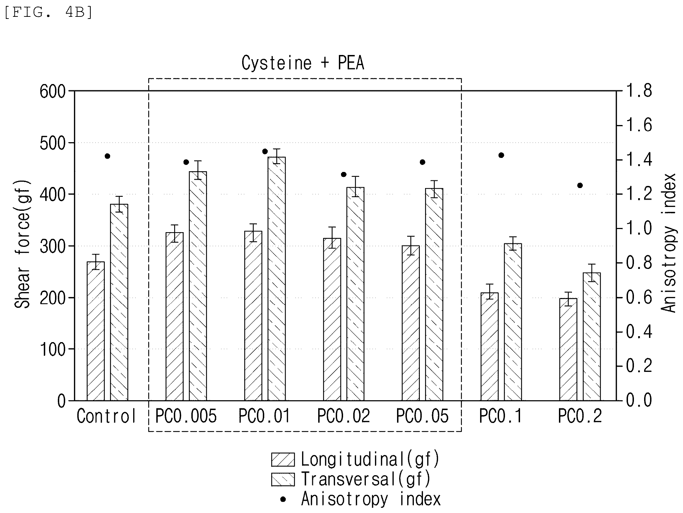

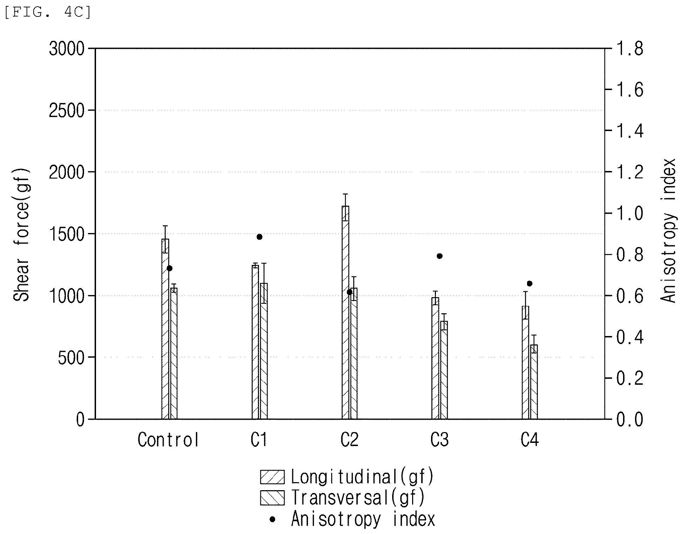

As a result, as shown in the following Table 6 and FIG. 4A, it was confirmed that TVP including the soy protein of Preparation Example 1 had a significantly increased shear force (gf), when cysteine was added at a content of 0.01% to 0.02%, and had decreased shear force, when soy protein was added at a content of 0.1% or more. In addition, as shown in the following Table 7 and FIG. 4B, it was confirmed that TVP including the pea protein of Preparation Example 2 had a significantly increased shear force, when cysteine was added at a content of 0.005% to 0.05%, and had decreased shear force, when cysteine was added at a content of 0.1%. Meanwhile, TVPs of Preparation Examples 1 and 2 did not clearly show tendency of the anisotropy index depending on the cysteine addition content. Also, as shown in the following Table 8 and FIG. 4C, the TVP including the protein raw material mixture of Preparation Example 3 had an increase or decrease in shear force in some cysteine added groups depending on the cysteine content, but all showed the anisotropy index of less than 1, and it was confirmed that texturization of TVP was insufficient when using only cysteine.

[Table 6]

| Blending ratio name | Control | SC0.005 | SC0.01 | SC0.02 | SC0.05 | SC0.1 | SC0.2 |
|---|---|---|---|---|---|---|---|
| Cysteine (%) | 0 | 0.005 | 0.01 | 0.02 | 0.05 | 0.1 | 0.2 |
| Longitudinal (gf) | 286.85 | 266.55 | 330.52* | 321.19* | 301.17 | 234.89* * | |
| Transversal (gf) | 362.09 | 333.91 | 409.97* | 460.09* | 362.26 | 288.44* * | 222.78* * |
| Anisotropy index | 1.26 | 1.25 | 1.24 | 1.43 | 1.2 | 1.23 | 1.41 |
| *) Measurements which were significantly different from control were marked (positive value*, negative value**). | | | | | | | |

[Table 7]

| Blending ratio name | Control | PC0.005 | PC0.01 | PC0.02 | PC0.05 | PC0.1 | PC0.2 |
|---|---|---|---|---|---|---|---|
| Cysteine (%) | 0 | 0.005 | 0.01 | 0.02 | 0.05 | 0.1 | 0.2 |
| Longitudinal (gf) | 269.72 | 322.10* | 325.90* | 315.21* | 298.27* | 211.81* * | 201.12* * |
| Transversal (gf) | 382.98 | 447.03* | 472.12* | 413.25* | 412.76 | 303.83* * | 249.51* * |
| Anisotropy index | 1.42 | 1.39 | 1.45 | 1.31 | 1.38 | 1.43 | 1.24 |
| *) Measurements which were significantly different from control were marked (positive value*, negative value**). | | | | | | | |

[Table 8]

| Blending ratio name | Control | C1 | C2 | C3 | C4 |
|---|---|---|---|---|---|
| Cysteine (%) | 0 | 0.01 | 0.03 | 0.05 | 0.15 |
| Anisotropy index | 0.72 | 0.88 | 0.61 | 0.80 | 0.66 |

## 1-4. Comparison of texture of textured vegetable protein by arginine (ARG) and cysteine (CYS) contents

When the composition for producing textured vegetable protein(TVP) including both arginine and cysteine was used, an effect on TVP texture was evaluated. Specifically, changes in TVP texture depending on content changes of arginine and cysteine in the composition for producing TVP were compared and analyzed. To the TVP including soy protein of Preparation Example 1, arginine and cysteine were added at contents shown in the following Table 9 to produce TVP, to the TVP including soy protein of Preparation Example 2, arginine and cysteine were added at contents shown in Table 10 to produce TVP, and to the TVP including the protein raw material mixture of Preparation Example 3, arginine and cysteine were added at contents shown in the following Table 11 to produce TVP. For TVPs produced as described above, degrees of texturization were measured by the method described above as in 1-1 of Example 1. At this time, as a control, TVP to which the composition for producing textured vegetable protein was not added and which was produced by extruding only the protein raw material was used, and as a comparison, SC1, SC2, PC1, PC2, SA, and PA which were produced at contents of arginine and/or cysteine described in the following Tables 9 to 11 were used.

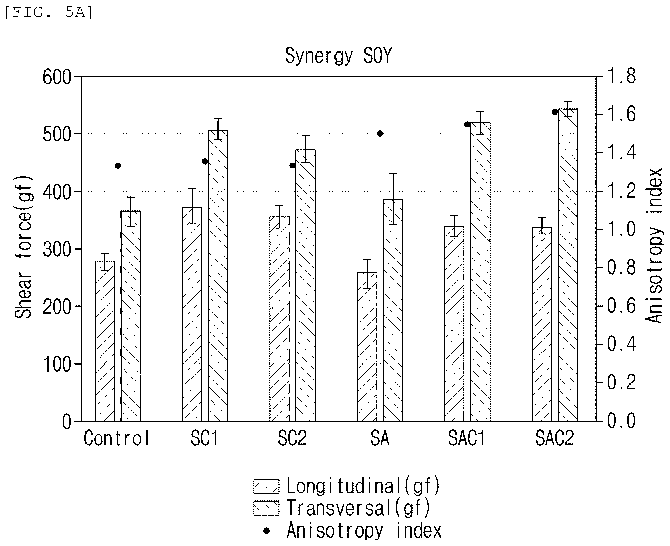

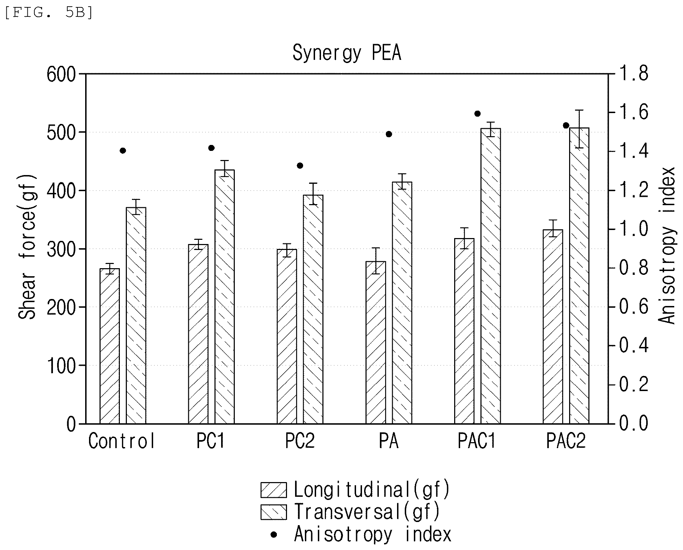

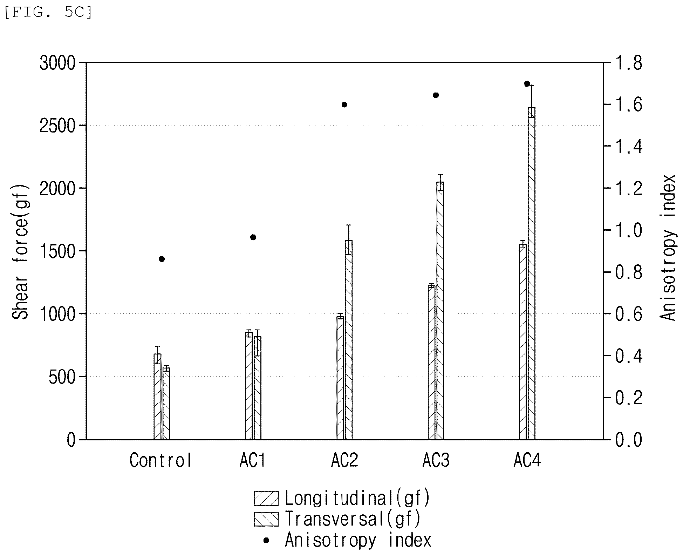

As a result, as shown in the following Tables 9 to 11 and FIGS. 5A to 5C, when cysteine was also added at a certain concentration or more in a state in which arginine was added, it was confirmed that degree of texture and anisotropy index were further increased. Thus, it was found that when arginine and cysteine are used in combination, there is a synergistic effect of improving texture of TVP.

[Table 9]

| Blending ratio name | Control | SC1 | SC2 | SA | SAC1 | SAC2 |
|---|---|---|---|---|---|---|
| Arginine (%) | 0 | 0 | 0 | 0.7 | 0.7 | 0.7 |
| Cysteine (%) | 0 | 0.01 | 0.05 | 0 | 0.01 | 0.05 |
| Longitudinal (gf) | 276.57 | 374.17* | 356.61* | 256.55 | 337.57* | 339.28* |
| Transversal (gf) | 364.69 | 503.84* | 472.37* | 385.01 | 520.70* | 544.76* |
| Anisotropy index | 1.32 | 1.35 | 1.32 | 1.50 | 1.54 | 1. 61 |

[Table 10]

| Blending ratio name | Control | PC1 | PC2 | PA | PAC1 | PAC2 |
|---|---|---|---|---|---|---|
| Arginine (%) | 0 | 0 | 0 | 0.7 | 0.7 | 0.7 |
| Cysteine (%) | 0 | 0.01 | 0.05 | 0 | 0.01 | 0.05 |
| Longitudinal (gf) | 264.97 | 308.12* | 298.48* | 279.33 | 317.06* | 330.54* |
| Transversal (gf) | 371.91 | 436.16* | 394.74 | 413.67* | 504.32* | 505.10* |
| Anisotropy index | 1.40 | 1.42 | 1.32 | 1.48 | 1.59 | 1.53 |
| *) Measurements which were significantly different from control were marked (positive value*, negative value**). | | | | | | |

[Table 11]

| Blending ratio name | Control | AC1 | AC2 | AC3 | AC4 |
|---|---|---|---|---|---|
| Arginine (%) | 0 | 0.65 | 0.65 | 0.65 | 0.65 |
| Cysteine (%) | 0 | 0.01 | 0.03 | 0.05 | 0.15 |
| Anisotropy index | 0.85 | 0.97 | 1.60 | 1.66 | 1.70 |

From the above experimental results, it was found that when TVP is produced by adding arginine or cysteine at certain contents, it may promote strengthening textural properties of TVP, and, in particular, when arginine and cysteine are used in combination, an effect of strengthening texture of TVP may be increased.

**[Example 2]**

**Comparison of textured vegetable protein depending on contents of lysine and histidine**

When the composition for producing textured vegetable protein (TVP) including lysine and histidine which are basic amino acids was used, an effect on TVP texture was evaluated. Specifically, the effect on TVP texture depending on a lysine or histidine content in the composition for producing TVP was compared and analyzed. To TVP including soy protein of Preparation Example 1, lysine was added at contents of 0.1% and 0.5% based on the final extrudate, respectively, thereby producing TVP (SL0.1 and SL0.5, respectively), and histidine was added at contents of 0.1% and 0.5%, based on the final extrudate, thereby producing TVP (SH0.1 and SH0.5, respectively). In addition, to TVP including pea protein of Preparation Example 2, lysine was added at contents of 0.1% and 0.5% based on the final extrudate, respectively, thereby producing TVP (PL0.1 and PL0.5, respectively), and histidine was added at contents of 0.1% and 0.5%, based on the final injection product, thereby producing TVP (PH0.1 and PH0.5, respectively). For TVPs produced as described above, degrees of texturization were measured by the method described above as in 1-1 of Example 1. At this time, as a control, TVP which did not include lysine and histidine and was produced by extruding only the protein raw material was used.

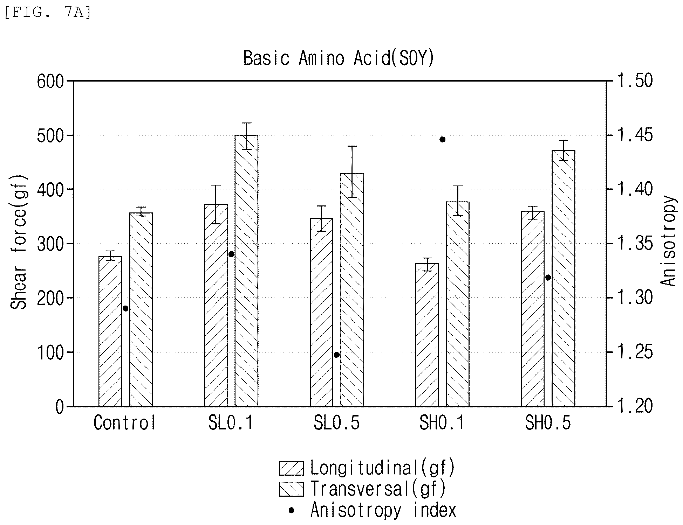

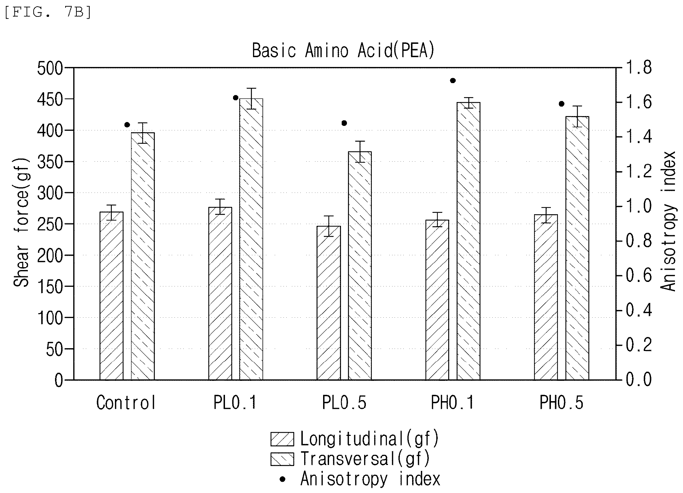

As a result, as shown in the following Tables 12 and 13 and FIGS. 7A to 7B, when lysine or histidine was added, the anisotropy index was higher than that of control, and thus, it was confirmed that use of lysine or histidine can improve the texture of TVP.

[Table 12]

| Blending ratio name | Control | SL0.1 | SL0.5 | SH0.1 | SH0.5 |
|---|---|---|---|---|---|
| Lysine (%) | 0 | 0.1 | 0.5 | 0 | 0 |
| Histidine (%) | 0 | 0 | 0 | 0.1 | 0.5 |
| Longitudina l (gf) | 277.39 | 371.20* | 345.96* | 261.67 | 356.92* |
| Transversal (gf) | 358.03 | 497.52* | 431.90* | 378.34 | 470.52* |
| Anisotropy index | 1.29 | 1.34 | 1.25 | 1.45 | 1.32 |
| *) Measurements which were significantly different from control were marked (positive value*, negative value**). | | | | | |

[Table 13]

| Blending ratio name | Control | PL0.1 | PL0.5 | PH0.1 | PH0.5 |
|---|---|---|---|---|---|
| Lysine (%) | 0 | 0.1 | 0.5 | 0 | 0 |
| Histidine (%) | 0 | 0 | 0 | 0.1 | 0.5 |
| Longitudina l (gf) | 268.88 | 277.38 | 246.20** | 257.11 | 264.83 |
| Transversal (gf) | 395.37 | 452.01* | 364.94 | 444.51* | 422.07 |
| Anisotropy index | 1.47 | 1.63 | 1.48 | 1.73 | 1.59 |
| *) Measurements which were significantly different from control were marked (positive value*, negative value**). | | | | | |

Hereinabove, representative examples of the present disclosure had been illustratively described, but the scope of the present disclosure is not limited to the certain examples described above, and appropriate modification may be carried out within the scope of the claims of the present disclosure by a person with ordinary skill in the art.

**Claims**

1. A composition for producing textured vegetable protein (TVP) comprising a basic amino acid.

2. The composition for producing textured vegetable protein of claim 1, wherein the basic amino acid includes at least one selected from the group consisting of arginine (Arg), histidine (His), and lysine (Lys).

3. The composition for producing textured vegetable protein of claim 1, further comprising cysteine (Cys).

4. The composition for producing textured vegetable protein of claim 3, wherein a weight ratio between the basic amino acid and the cysteine is 4:1 to 75:1.

5. The composition for producing textured vegetable protein of claim 1, wherein the composition for producing textured vegetable protein improves texture of the textured vegetable protein.

6. A composition for improving texture of textured vegetable protein (TVP) comprising the composition for producing textured vegetable protein of any one of claims 1 to 5.

7. A method for producing textured vegetable protein (TVP), the method comprising extruding a mixture of the composition for producing textured vegetable protein of any one of claims 1 to 5 and a vegetable protein raw material.

8. The method for producing textured vegetable protein of claim 7, further comprising mixing the composition for producing textured vegetable protein with a vegetable protein raw material, before the extrusion.

9. The method for producing textured vegetable protein of claim 7, wherein the vegetable protein raw material includes at least one selected from the group consisting of soybeans, peas, sesame, cotton seeds, and rice.

10. A method for improving texture of textured vegetable protein, the method comprising extruding a mixture of the composition for producing textured vegetable protein of any one of claims 1 to 5 and a vegetable protein raw material.

11. The method for improving texture of textured vegetable protein of claim 10, further comprising: mixing the composition for producing textured vegetable protein with a vegetable protein raw material, before the extrusion.

12. The method for improving texture of textured vegetable protein of claim 10, wherein the vegetable protein raw material includes at least one selected from the group consisting of soybeans, peas, sesame, cotton seeds, and rice.

13. Textured vegetable protein (TVP) comprising the composition for producing textured vegetable protein of any one of claims 1 to 5.

14. The textured vegetable protein of claim 13, wherein the basic amino acid is included at 0.005 to 5 wt% based on the total weight of the textured vegetable protein.

15. The textured vegetable protein of claim 13, wherein when the textured vegetable protein includes cysteine, the cysteine is included at 0.005 to 0.2 wt% based on the total weight of the textured vegetable protein.

16. The textured vegetable protein of claim 13, wherein when the composition for producing textured vegetable protein includes a basic amino acid and cysteine, a weight ratio between the basic amino acid and the cysteine is 4:1 to 75:1.

17. The textured vegetable protein of claim 13, further comprising a vegetable protein raw material including at least one selected from the group consisting of soybeans, peas, sesame, cotton seeds, and rice.

18. The textured vegetable protein of claim 13,

wherein the textured vegetable protein has an anisotropy index value calculated by the following Equation 1 of 1 or more, and
the cutting strength in Equation 1 is measured using a texture analyzer under the following measurement conditions:

[Equation 1]

$$\text{Anisotropy index} = \frac{\text{Transversal direction cutting strength}}{\text{Longitudinal direction cutting strength}}$$

[Measurement conditions]
**Instrument:** Micro stable (TA.XT plus)
**Mode:** Single compression
**Probe:** Warner Bratzler blade (HDP/WBV)
**Distances:** 25 mm
**Test speed:** 1/ *2*/ 10 mm/sec (pre-, -, post-)
**Auto trigger:** 0.005 N
**Sample size:** 20 * 20 * 5 mm.

[FIG. 1A]

EP 4 691 267 A1

Raw material supply amount (8g/min)

Moisture supply amount (11.5g/min)

Twin screw speed(150rpm)
Length(440mm):Radius(11mm)
(L/D value = 40:1)

Cooling die length(300mm)
Injection opening size 20*5mm

Motor

| Barrel temp#1 30℃ | Barrel temp#2 70℃ | Barrel temp#3 90℃ | Barrel temp#4 135℃ | Barrel temp#5 150℃ | Cooling die 20℃~70℃ |

Barrel temperature #1: first zone of five zones of extruder (30℃)
Barrel temperature #2: second zone of five zones of extruder (70℃)
Barrel temperature #3: third zone of five zones of extruder (90℃)
Barrel temperature #4: fourth zone of five zones of extruder (135℃)
Barrel temperature #5: fifth zone of five zones of extruder (150℃)
Cooling die temperature : different temperature applied depending on protein material used (20℃~70℃)
L/D value at twin screw length of 440mm and diameter of 11mm: 40:1

EP 4 691 267 A1

Raw material supply amount (10g/min)

Moisture supply amount (13.3g/min)

Twin screw speed(450rpm)
Length(440mm):Radius(11mm)
(L/D value = 40:1)

Cooling die length(300mm)
Injection opening size 20*5mm

Motor

| Barrel temp#1 30℃ | Barrel temp#2 70℃ | Barrel temp#3 140℃ | Barrel temp#4 150℃ | Barrel temp#5 150℃ | Cooling die 15℃ |

Barrel temperature #1: first zone of five zones of extruder (30℃)
Barrel temperature #2: second zone of five zones of extruder (70℃)
Barrel temperature #3: third zone of five zones of extruder (90℃)
Barrel temperature #4: fourth zone of five zones of extruder (135℃)
Barrel temperature #5: fifth zone of five zones of extruder (150℃)
Cooling die temperature: 15℃
L/D value at twin screw length of 440mm and diameter of 11mm: 40:1

[FIG. 2]

Cutting plane

Cutting plane

Cutting plane

Cutting plane

Longitudinal
direction

Transversal
direction

[FIG. 3A]

[FIG. 3B]

[FIG. 3C]

[FIG. 4A]

[FIG. 4B]

Cysteine + PEA

[FIG. 4C]

[FIG. 5A]

Synergy SOY

[FIG. 5B]

Synergy PEA

Longitudinal(gf)
Transversal(gf)
• Anisotropy index

[FIG. 5C]

[FIG. 6]

Control                                            AC3

[FIG. 7A]

Basic Amino Acid(SOY)

[FIG. 7B]

Basic Amino Acid(PEA)

## INTERNATIONAL SEARCH REPORT

| International application No. |
| --- |
| **PCT/KR2025/004365** |

### A. CLASSIFICATION OF SUBJECT MATTER

**A23L 33/105**(2016.01)i; **A23L 33/17**(2016.01)i; **A23L 33/175**(2016.01)i; **A23L 33/185**(2016.01)i; **A23J 3/14**(2006.01)i

According to International Patent Classification (IPC) or to both national classification and IPC

### B. FIELDS SEARCHED

Minimum documentation searched (classification system followed by classification symbols)

A23L 33/105(2016.01); A23J 3/00(2006.01); A23J 3/14(2006.01); A23J 3/16(2006.01); A23J 3/22(2006.01); A23J 3/34(2006.01); A23L 11/00(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 식물성 조직화 단백(texturized vegetable protein, TVP), 조직화(texturing), 염기성 아미노산(basic amino acid), 시스테인(cysteine), 압출 성형(extrusion), 육류 대체품(meat substitute)

### C. DOCUMENTS CONSIDERED TO BE RELEVANT

| Category* | Citation of document, with indication, where appropriate, of the relevant passages | Relevant to claim No. |
| --- | --- | --- |
| X | EP 4205552 A1 (BK GIULINI GMBH) 05 July 2023 (2023-07-05)<br>paragraphs [0010]-[0023], [0043]-[0055], [0070] | 1,2,5-14,17,18 |
| Y | | 3,4,15,16 |
| Y | WO 2023-178980 A1 (SHI, WEIYUE) 28 September 2023 (2023-09-28)<br>paragraphs [0005], [0023], [0040], [0041] | 3,4,15,16 |
| A | WO 2022-218863 A1 (NOVOZYMES A/S) 20 October 2022 (2022-10-20)<br>entire document | 1-18 |
| A | US 2019-0037883 A1 (AJINOMOTO CO., INC.) 07 February 2019 (2019-02-07)<br>entire document | 1-18 |
| A | KR 10-2023-0055419 A (CJ CHEILJEDANG CORPORATION) 26 April 2023 (2023-04-26)<br>entire document | 1-18 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 July 2025** | **25 July 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/004365**

| Patent document cited in search report | | | Publication date (day/month/year) | Patent family member(s) | | | Publication date (day/month/year) |
|---|---|---|---|---|---|---|---|
| EP | 4205552 | A1 | 05 July 2023 | EP | 4456732 | A1 | 06 November 2024 |
| | | | | KR | 10-2024-0132281 | A | 03 September 2024 |
| | | | | US | 2025-0064087 | A1 | 27 February 2025 |
| | | | | WO | 2023-126522 | A1 | 06 July 2023 |
| WO | 2023-178980 | A1 | 28 September 2023 | None | | | |
| WO | 2022-218863 | A1 | 20 October 2022 | CN | 117529235 | A | 06 February 2024 |
| | | | | EP | 4322761 | A1 | 21 February 2024 |
| | | | | US | 2024-0180197 | A1 | 06 June 2024 |
| US | 2019-0037883 | A1 | 07 February 2019 | EP | 3427595 | A1 | 16 January 2019 |
| | | | | JP | 6984588 | B2 | 22 December 2021 |
| | | | | WO | 2017-154992 | A1 | 14 September 2017 |
| KR | 10-2023-0055419 | A | 26 April 2023 | EP | 4420528 | A1 | 28 August 2024 |
| | | | | JP | 2024-536509 | A | 04 October 2024 |
| | | | | KR | 10-2767722 | B1 | 18 February 2025 |
| | | | | WO | 2023-068701 | A1 | 27 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240045601